# DEMANDE DE BREVET EUROPEEN

(11) **EP 4 717 940 A1**
(43) Date de publication de la demande: **01.04.2026**
(21) Numéro de dépôt: 25202844.4
(22) Date de dépôt: 17.09.2025
(51) Int. Cl.: F16C 35/077

(54) **DISPOSITIF DE MONTAGE D'UNE BAGUE DE ROULEMENTS DANS UN PIVOT DE ROUE DE VÉHICULE AUTOMOBILE**

(30) Priorité: 27.09.2024 FR 2410346
(71) Demandeur: Stellantis Auto SAS, 78300 Poissy (FR)
(72) Inventeur: AFRIAD, IDRISS, 20270 CASABLANCA (MA); ABOULQASIM, BRAHIM, 20280 CASABLANCA (MA)
(74) Mandataire: BCIP

(57) **Abrégé**

L'invention concerne un dispositif de montage d'une bague de roulements (2) dans un logement cylindrique (30) dont le pourtour est délimité latéralement par un épaulement (31), caractérisé en ce qu'il comprend un corps (1) destiné à recevoir ladite bague et portant, sur un premier côté, une nervure périphérique interne (11) formant butée axiale pour ladite bague et, sur le côté opposé, une série de pattes tangentielles (12) déformables destinées à être rabattues, après montage, sur l'épaulement dudit logement pour y fixer ladite bague.

## Description

L'invention concerne, de façon générale, le domaine des roulements et s'intéresse, plus particulièrement, au montage de ces roulements sur les trains de roues des véhicules automobiles.

Il est connu de réaliser l'assemblage et le verrouillage de composants mécaniques cylindriques au moyen de « circlips ». Les circlips sont des éléments de verrouillage, sous forme d'anneaux plats et élastiques, positionnés dans une gorge préalablement ménagée sur l'un des composants et créant ainsi un épaulement permettant de bloquer et de solidariser les divers composants de l'assemblage.

Dans le domaine automobile, les roulements sont généralement enfermés et retenus sur les trains de roues au moyen d'une bague destinée à prévenir leur glissement. Cette bague est calée entre une butée disposée sur son côté extérieur et un circlip monté sur son côté intérieur.

Plus précisément, la solution actuelle de montage des roulements consiste à les monter dans un logement central ménagé dans le pivot de la roue en y enserrant la bague. La bague se trouve alors bloquée, d'un côté, par un épaulement ménagé dans le logement du pivot et, du côté opposé, par un circlip. Toutefois, cette solution nécessite une opération préalable, sur le pivot, d'usinage d'une gorge interne destinée à accueillir et à retenir le circlip. Or, cette opération s'avère complexe car elle porte sur une zone interne du pivot, ce qui engendre un surcoût significatif.

La demande de brevet FR3135655A1 et le brevet FR2962177B1 décrivent l'utilisation de circlips pour le montage de roulements dans des pivots. Cependant, ces circlips sont nécessairement positionnés dans des rainures ou des gorges ménagées sur les pivots qui reçoivent les roulements ce qui ne permet donc pas de s'en affranchir.

Dans ce contexte problématique, l'invention a cherché une solution technique permettant le montage et le blocage d'un roulement dans un pivot de roue au moyen d'un dispositif perfectionné ne nécessitant pas la présence d'une quelconque gorge sur ce pivot.

Ce but est atteint, selon un premier aspect de l'invention, au moyen d'un dispositif de montage d'une bague de roulements dans un logement cylindrique dont le pourtour est délimité latéralement par un épaulement, caractérisé en ce qu'il comprend un corps destiné à recevoir ladite bague et portant, sur un premier côté, une nervure périphérique interne formant butée axiale pour ladite bague et, sur le côté opposé, une série de pattes tangentielles déformables destinées à être rabattues, après montage, sur l'épaulement dudit logement pour y fixer ladite bague.

Selon un mode de réalisation préférentiel du dispositif de montage de l'invention, la paroi latérale du corps cylindrique est pourvue d'une fente longitudinale permettant son ouverture par déformation élastique pour l'introduction de ladite bague.

Un autre objet de l'invention est un procédé de montage d'une bague de roulements au moyen d'un dispositif tel que défini ci-dessus dans un pivot de roue de véhicule automobile pourvu d'un logement cylindrique dont le pourtour est délimité sur un premier côté par un épaulement, caractérisé en ce qu'on ouvre le corps pour y placer ladite bague, on introduit par le second côté le corps avec la bague dans le logement du pivot jusqu'à ce que les pattes fassent saillie à l'extérieur du premier côté, puis on rabat lesdites pattes derrière l'épaulement pour fixer la bague avec le roulement dans le logement du pivot.

Encore un autre objet de l'invention est un pivot de roue de véhicule automobile comprenant un logement central cylindrique dont le pourtour est délimité sur un premier côté par un épaulement et destiné à recevoir une bague de roulements et un dispositif de montage tel que défini ci-dessus, caractérisé en ce que le diamètre intérieur du logement est supérieur au diamètre extérieur de la bague.

L'invention prévoit que la différence entre le diamètre intérieur du logement et le diamètre extérieur de la bague correspond sensiblement à l'épaisseur du corps.

Un dernier objet de l'invention est un véhicule automobile équipé d'au moins un pivot de roue tel que défini ci-dessus.

Ainsi, dans son principe le plus général, l'invention propose de remplacer, dans les véhicules automobiles, les circlips traditionnels utilisés actuellement pour le montage et le verrouillage d'un ensemble de liaison au sol par un dispositif dont la structure ne nécessite pas la présence, dans cet ensemble, d'une gorge de réception d'un circlip.

En particulier, l'invention vise le montage d'une bague de roulements dans un pivot de roue de véhicule automobile au moyen d'un dispositif perfectionné assurant à lui-seul le verrouillage de la bague dans le pivot.

Par conséquent, l'invention offre un gain significatif de coût en réduisant le nombre d'opérations de fabrication du pivot et facilite, en outre, le procédé de montage de la bague de roulements en s'affranchissant des opérations longues et laborieuses d'usinage, de montage et de contrôle du pivot. Ainsi, la solution technique proposée par l'invention constitue une alternative plus économique tout en garantissant la fiabilité de la fixation du roulement.

En outre, le procédé de montage de l'invention est conçu de façon à être réversible car l'extraction de la bague peut être effectuée aisément et rapidement en soulevant les pattes pour libérer le corps avec la bague ce qui facilite la tâche des équipes de maintenance.

Le dispositif et le procédé de montage de l'invention ne sont pas limités à une application à un pivot de roue En effet, l'invention peut être avantageusement utilisée pour le montage d'une bague de roulements dans tout logement cylindrique ménagé dans une pièce mécanique et délimité, sur un de ses côtés, par un épaulement périphérique.

D'autres caractéristiques et avantages de l'invention ressortiront à la lecture de la description qui va suivre, en référence aux figures annexées, pour lesquelles :
[Fig. 1] est une vue en perspective éclatée d'un mode de montage traditionnel d'une bague de roulements dans un pivot de roue au moyen d'un circlip.
[Fig. 2] est une vue en perspective éclatée d'un mode de réalisation préférentiel du dispositif de l'invention destiné au montage d'une bague de roulements dans un pivot de roue.
[Fig. 3] est une demie-vue en coupe transversale du dispositif de la figure 2 pour le montage d'une bague de roulements avant verrouillage des pattes sur l'épaulement du pivot de roue.
[Fig. 4] est une demi-vue en coupe transversale du dispositif de la figure 2 pour le montage d'une bague de roulements après verrouillage des pattes sur l'épaulement du pivot de roue.
[Fig. 5] est une vue en perspective de côté du pivot de roue équipé du dispositif de la figure 2 après montage de la bague de roulements.

Pour plus de clarté, les éléments identiques ou similaires sont repérés par des signes de référence identiques sur l'ensemble des figures.

Naturellement, les modes de réalisation du dispositif de montage de l'invention illustrés schématiquement par les figures présentées ci-dessus et décrites ci-après, ne sont donnés qu'à titre d'exemples non limitatifs. Il est explicitement prévu dans le cadre de l'invention que l'on puisse proposer et combiner entre eux différents modes pour en proposer d'autres.

L'invention concerne le domaine général des ensembles de liaison au sol et, notamment, des trains de roues équipant les véhicules automobiles et s'intéresse, plus particulièrement, aux dispositifs destinés au montage de la bague de roulements dans un pivot de roue intégré à de tels ensembles.

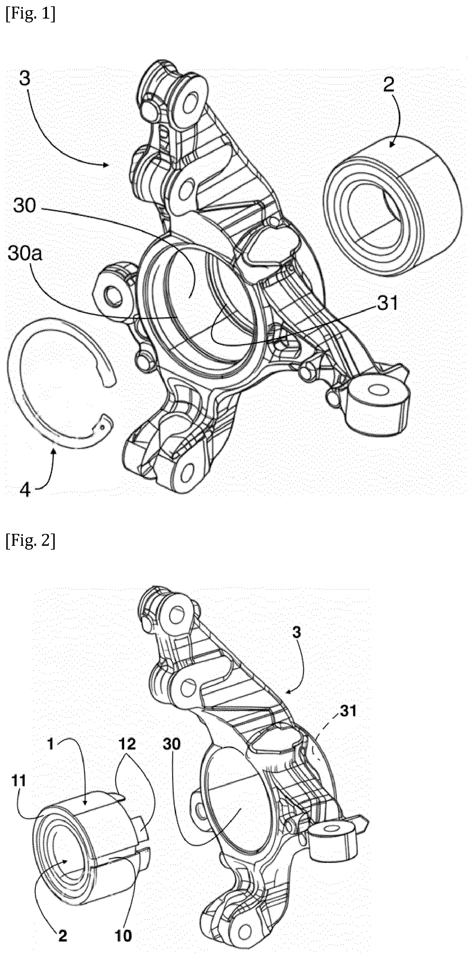

Plus précisément, l'invention a cherché à développer une solution technique alternative aux circlips et adaptée au montage d'un ensemble, tel que représenté sur la figure 1, comprenant, notamment, un pivot 3 destiné à un train de roues. Ce pivot 3 est pourvu d'un logement central 30 destiné à recevoir une bague de roulements 2 verrouillée de façon traditionnelle par un circlip 4 sous forme d'un d'anneau plat et élastique retenu dans une gorge interne 30a. Ce logement 30 est délimité du côté opposé à la gorge 30a, par un épaulement périphérique 31 destiné à éviter un échappement de la bague 2. La gorge est généralement réalisée directement par usinage de la paroi interne du logement 30 lors de la fabrication du pivot 3.

Afin de simplifier la réalisation du pivot et de réduire son coût de fabrication, l'invention vise à s'affranchir de la présence de cette gorge et à remplacer le circlip existant par un dispositif perfectionné assurant de façon fiable le verrouillage de la bague 2 dans le logement 30.

Dans cet objectif, l'invention consiste à proposer un dispositif de montage perfectionné dont un mode de réalisation est représenté sur les figures 2 à 5. Ce dispositif comprend un corps cylindrique 1 destiné à recevoir la bague de roulements 2.

La paroi latérale du corps cylindrique 1 est pourvue d'une fente longitudinale 10 permettant l'écartement de cette paroi par déformation élastique pour permettre l'introduction de la bague de roulements 2.

Le corps 1 porte, sur un premier côté (le côté gauche sur la figure 2), une nervure interne 11 s'étendant de façon périphérique et formant une butée pour bloquer le déplacement axial de la bague 2.

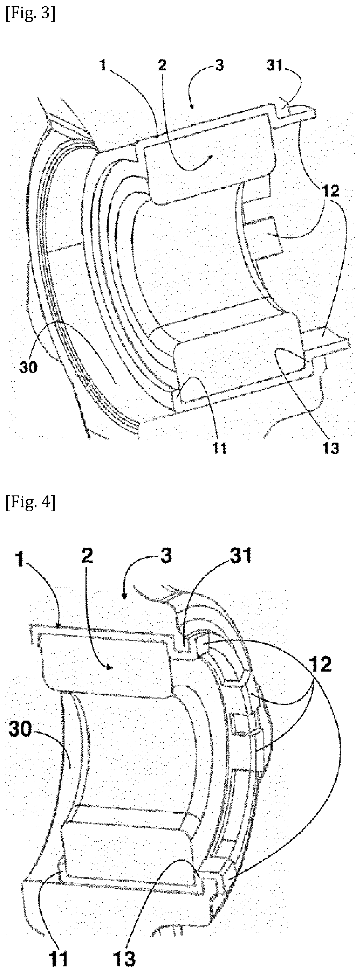

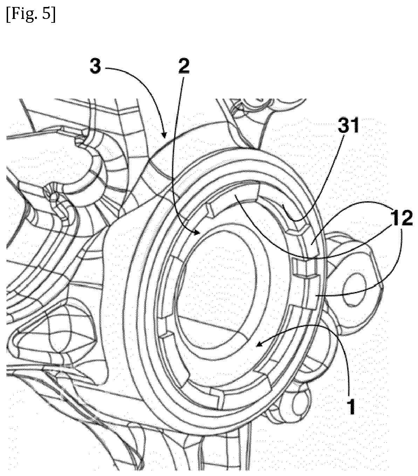

Sur le côté opposé (le côté droit sur la figure 2), le corps 1 porte un second épaulement 13 ainsi q'une série de pattes 12 s'étendant de façon tangentielle par rapport à la paroi latérale du corps 1, comme illustré par la figure 3 avant verrouillage du corps 1 dans le pivot 3. Ces pattes 12 sont déformables et sont destinées à être rabattues sur l'épaulement 31 du logement 30 pour verrouiller le montage du corps 1 avec la bague 2 dans le pivot 3, comme illustré par les figures 4 et 5.

Le procédé de montage de la bague de roulements 2 est assuré au moyen du dispositif décrit ci-dessus et effectué de la manière décrite ci-après. On ouvre tout d'abord le corps 1 en écartant sa paroi latérale pour y placer la bague. Puis, on introduit le corps 1 avec la bague 2 dans le logement 30 du pivot 3 du côté opposé à l'épaulement 31 jusqu'à ce que les pattes 12 fassent saillie à l'extérieur sur le côté opposé, au-delà de cet épaulement, comme illustré par la figure 3. On rabat ensuite les pattes 12 derrière l'épaulement 31 pour fixer et verrouiller l'ensemble du corps 1 et de la bague de roulements 2 dans le logement 30 du pivot 3, comme illustré par la figure 5.

Du fait que le circlip traditionnel est remplacé par le dispositif de montage de l'invention, la présence dans le logement 30 du pivot 3 de la gorge 30a n'est plus nécessaire. Toutefois, l'invention prévoit que pour assurer une retenue mécanique stable dans le temps, le diamètre intérieur du logement 30 est supérieur au diamètre extérieur de la bague 2 et que la différence entre ces deux diamètres corresponde sensiblement à l'épaisseur de la paroi latérale du corps 1. Dans cette configuration, la fixation de la bague 2 dans le pivot 3 est renforcée par un léger serrage radial entre la paroi interne du logement 30 et la paroi externe du corps 1.

Le montage de la bague de roulements 2 dans le pivot 3 est réversible. Le démontage peut être effectué en séparant le dispositif de l'invention. A cet effet, on déplie les pattes 12 vers l'extérieur (du côté droit sur les figures) pour déverrouiller le corps 1, puis on exerce une poussée axiale sur la bague 2 pour faire coulisser le corps 1 dans le logement 30 jusqu'à l'extraire par le côté opposé (côté gauche sur les figures).

## Revendications

1. Dispositif de montage d'une bague de roulements (2) dans un logement cylindrique (30) dont le pourtour est délimité latéralement par un épaulement (31), **caractérisé en ce qu'**il comprend un corps (1) destiné à recevoir ladite bague et portant, sur un premier côté, une nervure périphérique interne (11) formant butée axiale pour ladite bague et, sur le côté opposé, une série de pattes tangentielles (12) déformables destinées à être rabattues, après montage, sur l'épaulement dudit logement pour y fixer ladite bague.

2. Dispositif selon la revendication 1, **caractérisé en ce que** la paroi latérale du corps cylindrique (1) est pourvue d'une fente longitudinale (10) permettant son ouverture par déformation élastique pour l'introduction de ladite bague (2).

3. Procédé de montage d'une bague (2) de roulements au moyen d'un dispositif selon la revendication 1 ou 2 dans un pivot (3) de roue de véhicule automobile pourvu d'un logement cylindrique (30) dont le pourtour est délimité sur un premier côté par un épaulement (31), **caractérisé en ce qu'**on ouvre le corps (1) pour y placer ladite bague (2), on introduit par le second côté le corps avec la bague dans le logement du pivot jusqu'à ce que les pattes (12) fassent saillie à l'extérieur du premier côté, puis on rabat lesdites pattes derrière l'épaulement (31) pour fixer la bague (2) avec le roulement dans le logement (30) du pivot (3).

4. Pivot (3) de roue de véhicule automobile comprenant un logement central cylindrique (30) dont le pourtour est délimité, sur un premier côté, par un épaulement (31) et destiné à recevoir une bague (2) de roulements et un dispositif de montage selon l'une des revendications 1 ou 2, **caractérisé en ce que** le diamètre intérieur du logement (30) est supérieur au diamètre extérieur de la bague (2).

5. Pivot de roue selon la revendication précédente, **caractérisé en ce que** la différence entre le diamètre intérieur du logement (30) et le diamètre extérieur de la bague (2) correspond sensiblement à l'épaisseur du corps (1).

6. Véhicule automobile équipé d'au moins un pivot (3) de roue selon l'une des revendications 4 ou 5.
